# EUROPÄISCHE PATENTSCHRIFT

(11) **EP 0 450 150 B1**
(45) Veröffentlichungstag und Bekanntmachung des Hinweises auf die Patenterteilung: **18.05.1994**
(21) Anmeldenummer: 90121196.1
(22) Anmeldetag: 06.11.1990
(51) Int. Cl.: H01M 2/20, H01M 2/38

(54) **Batterie-Anschlussvorrichtung**
Battery connection device
Dispositif de connexion pour une pile

(30) Priorität: 17.03.1990 DE 9003174 U
(43) Veröffentlichungstag der Anmeldung: 09.10.1991
(73) Patentinhaber: VARTA Batterie Aktiengesellschaft, D-30405 Hannover (DE)
(72) Erfinder: Böllet, Herrmann, W-8501 Rosstal (DE); Schmidt, Hartmut, W-5820 Gevelsberg (DE); Thomas, Joachim, W-5800 Hagen 1 (DE)
(74) Vertreter: Kaiser, Dieter Ralf, Dipl.-Ing.

(56) Entgegenhaltungen:
- DE-B- 1 249 961
- DE-U- 9 003 174
- US-A- 1 632 535
- US-A- 4 557 984

## Beschreibung

Die Neuerung betrifft eine Vorrichtung zum Anschließen einer Akkumulatorenbatterie mit Elektrolytumwälzung, insbesondere Traktionsbatterie, an eine Stromversorgungs- und an eine Druckgas-Quelle.

Druckgasbetätigte Pumpensysteme zur Erzeugung einer Elektrolytzirkulation in Akkumulatorenzellen dienen dazu, die Entstehung von Konzentrations- und Temperaturunterschieden innerhalb des Elektrolytraumes zuverläsig zu verhindern.

Bei Bleiakkumulatoren hat die bekannte Säureschichtung, die sich insbesondere nach Tiefentladungen in einer Ansammlung von Schwefelsäure mit höherem spezifischen Gewicht in Bodennähe und einer Säureverarmung in den oberen Schichten äußert, einen ungünstigen Einfluß auf Kapazität und Lebensdauer. Für die Beseitigung des Konzentzrationsgefälles reicht der Rühreffekt der beim Laden entstehenden Gasblasen im allgemeinen nicht aus, es sei denn bei längerem Überladen, weil die Blasen rasch nach oben entweichen, ohne daß die unten befindliche "schwere" Säure einer wirksamen Turbulenz ausgesetzt wird.

Bekannte Pumpvorrichtungen, z. B. gemäß DE-PS 27 41 933, sehen daher eine extern gespeiste Gasblasenquelle am Boden des Zellgefäßes vor oder arbeiten gemäß DE-PS 29 12 527 ebenfalls mit Hilfe einer externen Druckgasquelle, nach dem Prinzip der Mammutpumpe, wobei in jedem Fall der Elektrolyt ganzheitlich von einer Kreisbewegung erfaßt wird, die das Entstehen eines Konzentrationsgefälles verhindert.

Die Elektrolytumwälzung erweist sich daher als eine sehr vorteilhafte Parallelmaßnahme zur Batterieladung in allen Fällen der Praxis, bei denen Akkumulatorenbatterien aufgrund einer starken zyklischen Beanspruchung, beispielsweise in Flurförderfahrzeugen, die im Schichtbetrieb eingesetzt sind, in kurzen Zeiträumen wieder aufgeladen werden müssen. Es muß dann an der Ladestation neben der elektrischen Kabelverbindung zwischen dem Gabelstapler bzw. der Traktionsbatterie und dem Ladegerät auch noch eine pneumatische Verbindung zwischen der Batterie und einer Druckgasquelle hergestellt werden. Eine Einrichtung für diesen Zweck läßt sich der EP-A 103 069 entnehmen.

Bei dieser ist die Druckgasquelle, ein Kompressor, bereits in das Ladegerät integriert, der Anschluß der vom Kompressor ausgehenden Gasleitung an die Batterie erfolgt jedoch getrennt von dem elektrischen Anschluß über eine eigens dafür vorgesehene Steckkupplung. Das getrennte Verkuppeln der Gaszuführungsleitungen und der Stromkabel mittels entsprechender Kupplungsteile ist zeitaufwendig.

Der Neuerung liegt daher die Aufgabe zugrunde, eine Vorrichtung aufzuzeigen, durch welche der Zusammenschluß der Luftleitungen und der elektrischen Verbindungsleitungen vereinfacht werden wird.

Die Aufgabe wird neuerungsgemäß mit einer Anschlußvorrichtung gelöst, wie sie im Schutzanspruch 1 angegeben ist.

Lösbare elektrische Batterieanschlüsse mittels Kupplungen gehen in der Regel auf Steckverbindungen zurück. Alle derartigen Kupplungen umfassen demnach stets ein Steckerteil und ein mit diesem korrespondierendes Dosenteil. Neuerungsgemäß werden Steckerteil und Dosentei einer elektrischen Kupplung jeweils mit den entsprechenden Teilen einer pneumatischen Kupplung, welche gleichfalls eine Steckverbindung ist, mechanisch miteinander so verbunden, daß die korrespondierenden Teile der neuen Anschlußvorrichtung aus Verbundteilen analog einem Steckerteil für einen kombinierten pneumatischen und elektrischen Anschluß einerseits und einem entsprechenden Dosenteil andererseits gebildet sind. Die neue Anschlußvorrichtung, deren Dosenteil im entkoppelten Zustand zweckmäßig an der Batterie und deren Steckerteil am Ladegerät oder Fahrzeug hängt, erlaubt es, eine Luftversorgungsleitung und das Ausgangskabel eines Ladegeräts gemeinsam und durch einen einzigen Kopplungsschritt an die Batterie anzuschließen.

Zur mechanischen Verbindung eines pneumatischen mit einem elektrischen Kupplungsteil genügt oft eine einfache Verschraubung. Um jedoch eine funktionsgerechte exakte Anpassung der Kupplungsteile sicherzustellen, können an marktüblichen elektrischen Steckvorrichtungen Hilfskontakte wie z. B. Stifte an den Steckergehäusen angebracht sein, die in korrespondierende Bohrungen an den Luftkupplungselementen eingreifen. Dabei liegt es im Rahmen der Neuerung, eine genügende Anzahl von Bohrungen mit einer geeigneten geometrischen Verteilung an den Luftkupplungselementen vorzusehen, damit die Möglichkeit einer Adaptierung sich auch auf etwa vorhandene Varianten bzw. verschiedene Fabrikate seitens der elektrischen Kupplung erstrecken kann.

In einer besonders günstigen Ausführungsform, die die Adaptierfähigkeit auch auf elektrische Normsteckvorrichtungen ausdehnt, ist die Anschlußvorrichtung gemäß Neuerung so gestaltet, daß die Steckerteile von Luftkupplung und elektrischer Kupplung einerseits und die Dosenteile von Luftkupplung und elektrischer Kupplung andererseits über Grund- oder Adapterplatten miteinander verbunden sind, auf deren eine Seite jeweils das Steckerteil bzw. das Dosenteil der Luftkupplung und auf deren andere Seite jeweils das Stecker- bzw. Dosenteil der elektrischen Kupplung aufmontiert ist.

Diese bevorzugte Ausführungsform der neuen Anschlußvorrichtung wird anhand einiger Figuren erläutert.

Figur 1 zeigt eine Luftkupplung im entkoppelten Zustand und in ihre Bestandteile zerlegt.

Figur 2 zeigt Grundplatten zum Adaptieren eines Stecker- oder Dosenteils der Luftkupplung an ein entsprechendes Teil einer elektrischen Kupplung.

Figur 3 zeigt das Dosenteil einer elektrischen Normkupplung gemäß DIN 43 589.

Figur 4 zeigt eine zum gleichzeitigen Anschließen der Batterie an eine Luftversorgungsleitung und an ein elektrisches Ladekabel eingerichtete Kupplung gemäß Neuerung.

Figur 5 zeigt das Steckerteil der Kupplung von Figur 4, teils in Frontalansicht, teils im Querschnitt.

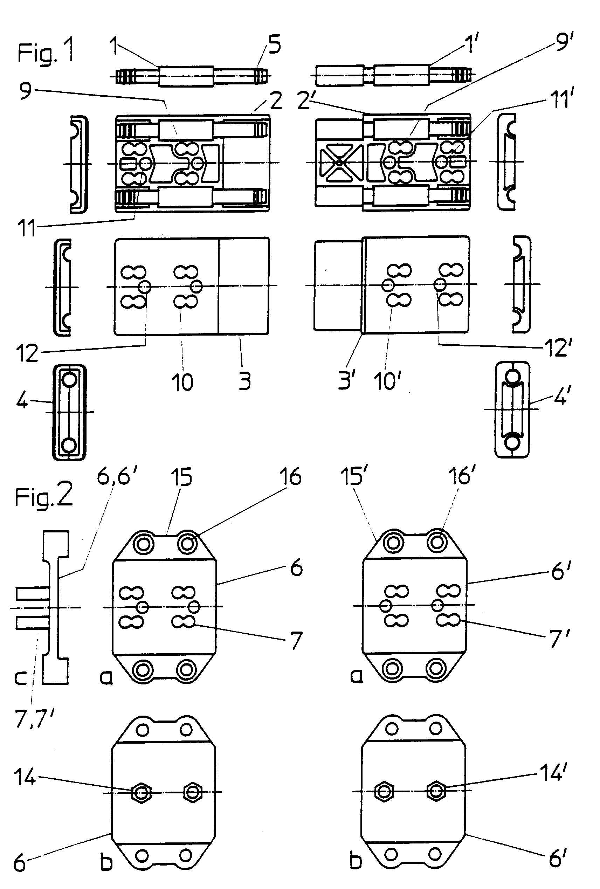

In Figur 1 ist zunächst die Luftkupplung in entkoppeltem Zustand und in ihre Einzelbestandteile zerlegt dargestellt. Dabei bilden die mit einfachen Bezugsziffern bezeichneten Teile auf der linken Seite der Figur, nämlich das Anschlußelement 1 (zweckmäßigerweise als Doppel vorhanden), eine die Anschlußelemente aufnehmende Unterschale 2 und ein Deckel 3 (Draufsicht) zusammen das Steckerteil 4 der Luftkupplung (Seitenansicht). In entsprechender Weise setzt sich aus Anschlußelementen 1', einer Unterschale 2' und einem Deckel 3' das zugehörige Dosenteil 4' zusammen. (Die Zuordnung einfacher Bezugszeichen jeweils zur Steckerteil-Seite der Batteriesteckvorrichtung und die Zuordnung gestrichener Bezugszeichen zur Dosenteil-Seite gilt auch für alle übrigen Figuren).

Beim Zusammenstecken der Kupplungselemente 4 und 4' vereinigen sich die Anschlußelemte 1 und 1' unter gegenseitiger Abdichtung mittels eines am Anschlußelement 1 angebrachten O-Ringes 5 zu durchgehenden Luftleitungen.

Die damit an sich fertige Luftkupplung bedarf jedoch noch einer "Bündelung" mit einer elektrischen Kupplung in der Weise, daß mit dem Zusammenschließen der Luftkupplungselemente zugleich die elektrische Verbindung zwischen Batterie und Ladegerät hergestellt ist.

Den Zusammenschluß ermöglichen in diesem Fall zwei im wesentlichen identische Grund- oder Adapterplatten nach Figur 2, von denen die Grundplatte 6 die Adaptierung des Steckerteils 4 der Luftkupplung an das Steckerteil einer elektrischen Kupplung und die Grundplatte 6' die Adaptierung des Dosenteils 4' der Luftkupplung an das Dosenteil der elektrischen Kupplung übernimmt.

Beide Grundplatten sind jeweils durch ihre Oberseite (a), ihre Unterseite (b) sowie durch eine Seitenansicht (c) dargestellt.

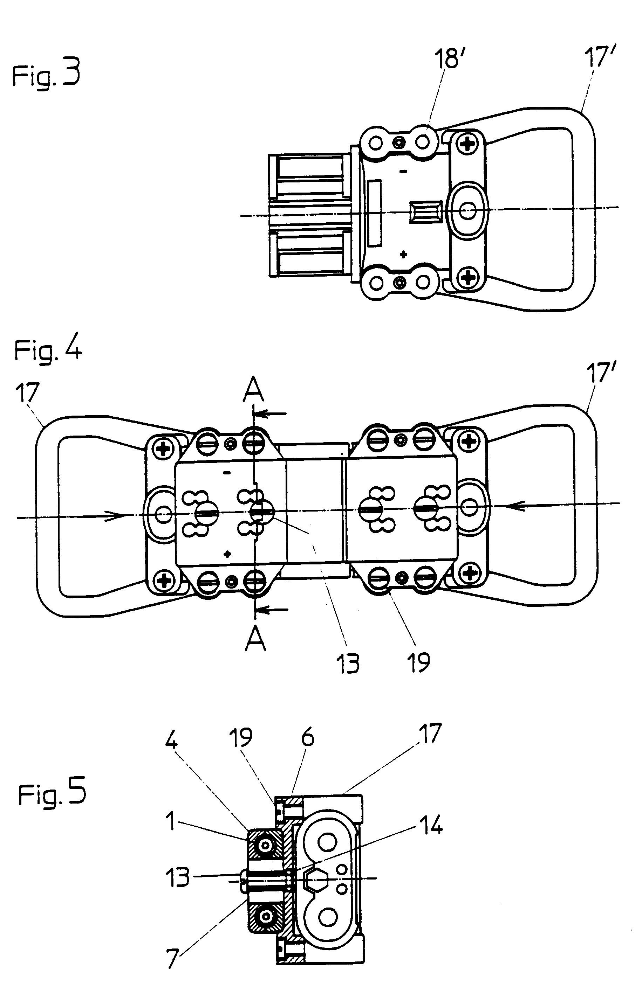

Auf die Oberseite der Adapterplatte 6 wird nunmehr das Steckerteil 4 der Luftkupplung und auf die Oberseite der Adapterplatte 6' das Dosenteil der Luftkupplung aufgeschraubt. Dabei greifen Führungsstifte 7, die sich auf der Oberseite der Adapterplatte 6 befinden, in korrespondierende Bohrungen 9, 10 an den Halbschalen des Luft- Steckerteils ein. Weitere Bohrungen 11, 12 in den Halbschalen nehmen Befestigungsschrauben 13 (siehe Figur 4 und 5) auf, die mit ihren Enden von den Sechskantmuttern 14 an der Unterseite der Adapterplatte 6 gefaßt werden. Die Befestigung des Dosenteils 4' auf der Oberseite von Adapterplatte 6' durch Aufstecken und Verschrauben erfolgt ganz analog.

Zur Befestigung des Steckerteils und des Dosenteils einer elektrischen Kupplung an der Unterseite der Adapterplatte 6 bzw. 6' besitzen diese an ihrer Peripherie einander gegenüberliegende Flansche 15 mit Bohrungen 16.

Die Geometrie dieser Flansche bzw. Bohrungen ist nun derart, daß sie mit entsprechenden Bohrungen an den Kupplungsteilen einer elektrischen Normsteckvorrichtung koinzidieren, wenn letztere auf die Unterseite der jeweils entsprechenden Adapterplatte paßgerecht aufgebracht werden. Die Bohrkanäle dienen der Aufnahme von Schrauben und machen damit eine von den Luftkupplungselementen unabhängige Befestigung der elektrischen Normsteckerteile an den Adapterplatten möglich.

Figur 3 gibt das Dosenteil 17' einer elektrischen Normsteckvorrichtung gemäß DIN 43589 in einer Draufsicht wieder. Die dort vorhandenen Bohrungen 18' fallen mit den Bohrungen 16' einer paßgerecht aufgelegten Adapterplatte 6' zusammen, so daß mittels Schrauben 19, Fig. 4 und 5) ein fester Verbund hergestellt werden kann. In Figur 4 ist das elektrische Dosenteil 17' der Figur 3 nach Aufmontieren der Adapterplatte 6' und des Dosenteils 4' der Luftkupplung mit einem entsprechend komplettierten elektrischen Normsteckerteil 17 zusammengekoppelt.

Figur 5 macht die Struktur der neuen Batteriekupplung noch einmal an dem kompletten Steckerteil, bestehend aus elektrischen Normstecker 17, Luftsteckerteil 4 mit inliegenden Luftanschlußelementen 1, und Adapterplatte 6 deutlich. Um die Funktion der Befestigungselemente (Führungsstifte 7, Schrauben 13, 14, 19) mit den von diesen ausgefüllten Bohrungen klarer erkennbar zu machen, sind das Luftsteckerteil und die Adapterplatte durch eine Querschnittsdarstellung wiedergegeben, wobei die Querschnittsebene mit der mehrfach gebrochenen Spur A-A in Figur 4 wechselt. Der elektrische Stecker 17 erscheint dagegen in einer Frontalansicht, aus der Richtung der Pfeile gesehen.

Dank der Neuerung wird an Ladestationen für Elektrofahrzeuge eine größere Flexibilität bei der Handhabung der Traktionsbatterien durch das Bedienungspersonal erreicht, weil die Stromversorgung und die Luftzufuhr für den Betrieb von Elektrolytumwälzpumpen nicht mehr über getrennte Brücken erfolgen müssen. Darüber hinaus besitzt der Gegenstand der Neuerung den Vorteil, daß die Adaptierung der Luftkupplungselemente nicht nur mit einer bestimmten marktgängigen Art von elektrischen Batteriesteckern, sondern gegebenenfalls auch mit Varianten derselben sowie mit Normsteckern vorgenommen werden kann.

## Patentansprüche

1. Vorrichtung zum Anschließen einer Akkumulatorenbatterie mit Elektrolytumwälzung, insbesondere Traktionsbatterie, an eine Stromversorgungs- und an eine Druckgas-Quelle, dadurch gekennzeichnet, daß sie eine Luftkupplung und eine elektrische Kupplung enthält, von welchen jeweils die Steckerteile (4, 17) und die Dosenteile (4', 17') mechanisch miteinander verbunden sind und daß die Verbundteile unter gleichzeitiger Herstellung der pneumatischen Verbindung und der elektrischen Verbindung koppelbar sind.

2. Vorrichtung nach Anspruch 1, dadurch gekennzeichnet, daß zum Verbinden der Steckerteile von Luftkupplung und elektrischer Kupplung einerseits und zum Verbinden der Dosenteile von Luftkupplung und elektrischer Kupplung andererseits Grund- oder Adapterplatten (6, 6') vorgesehen sind, auf deren eine Seite jeweils das Steckerteil bzw. das Dosenteil der Luftkupplung und auf deren andere Seite jeweils das Stecker- bzw. Dosenteil der elektrischen Kupplung aufmontiert ist.

3. Vorrichtung nach Anspruch 2, dadurch gekennzeichnet, daß die Adapterplatten zur Montage und Positionierung des Steckerteils bzw. Dosenteils der Luftkupplung auf ihrer einen Seite Führungsstifte (7, 7') besitzen, mit denen Bohrungen (9, 10, 9', 10') an den Teilen der Luftkupplung korrespondieren und auf welche diese Teile aufsteckbar sind, und daß zur Adaptierung an das Steckerteil bzw. Dosenteil der elektrischen Kupplung an den Adapterplatten periphere Flansche (15, 15') vorhanden sind, die Bohrungen (16, 16') besitzen, welche mit Bohrungen eines auf die andere Seite der Adapterplatten jeweils aufgebrachten elektrischen Kupplungsteiles koinzidieren und durch welche Befestigungsschrauben (19) hindurchführbar sind.

4. Vorrichtung nach Anspruch 2 oder 3, dadurch gekennzeichnet, daß die Teile der Luftkupplung mit der jeweiligen Adapterplatte zusätzlich verschraubt sind.

5. Vorrichtung nach einem der Ansprüche 2 bis 4, dadurch gekennzeichnet, daß das Steckerteil und das Dosenteil der elektrischen Kupplung genormte Teile einer elektrischen Steckvorrichtung sind.

## Claims

1. Apparatus for connecting an accumulator battery with electrolyte circulation, in particular a traction battery, to a power supply source and to a compressed gas source, characterized in that it has an air coupling and an electrical coupling, of which in each case the plug parts (4, 17) and the socket parts (4', 17') are connected mechanically to one another, and in that the connection parts can be coupled with the pneumatic connection and the electrical connection being made simultaneously.

2. Apparatus according to Claim 1, characterized in that, to connect the plug parts of the air coupling and the electrical coupling on the one hand and to connect the socket parts of the air coupling and the electrical coupling on the other hand, base or adapter plates (6, 6') are provided on the one side of which in each case the plug part or the socket part of the air coupling is mounted and on the other side of which in each case the plug or socket part of the electrical coupling is mounted.

3. Apparatus according to Claim 2, characterized in that the adapter plates for mounting and positioning the plug part or socket part of the air coupling have on their one side guide pins (7, 7') with which bores (9, 10, 9', 10') on the parts of the air coupling correspond and onto which these parts can be pushed, and in that for adapting to the plug part or socket part of the electrical coupling there are on the adapter plates peripheral flanges (15, 15') having bores (16, 16') which coincide with bores of an electrical part mounted in each case on the other side of the adapter plates and through which securing screws (19) can be passed.

4. Apparatus according to Claim 2 or 3, characterized in that the parts of the air coupling and the respective adapter plate are additionally connected with screws.

5. Apparatus according to one of Claims 2 to 4, characterized in that the plug part and the socket part of the electrical coupling are standardized parts of electrical plugging equipment.

## Revendications

1. Dispositif de branchement d'une batterie d'accumulateur à recirculation d'électrolyte, notamment une batterie de traction à une alimentation en courant et à une source de gaz comprimé, caractérisé en ce qu'il comprend une connexion d'air et une connexion électrique, dont chaque fois les pièces de prise (4, 17) et les pièces de boîtier (4', 17') sont reliées mécaniquement et que les pièces de connexion peuvent être branchées simultanément par la connexion pneumatique et de la connexion électrique.

2. Dispositif selon la revendication 1, caractérisé en ce que pour relier les pièces de prise de la connexion d'air et de la connexion électrique d'une part et pour relier les pièces de boîtier de la connexion d'air et de la connexion électrique d'autre part on prévoit des plaques de base ou d'adaptateur (6, 6'), sur un côté desquelles on monte chaque fois la pièce de prise ou la pièce de boîtier de la connexion d'air et sur l'autre côté on monte respectivement la pièce de prise ou la pièce de boîtier de la connexion électrique.

3. Dispositif selon la revendication 2, caractérisé en ce que les plaques d'adaptateur possèdent des tiges de guidage (7, 7') sur une de leurs surfaces pour monter et positionner la pièce de prise ou la pièce de boîtier de la connexion d'air qui correspondent aux trous (9, 10, 9', 10') sur les pièces de connexion d'air et sur lesquelles ces pièces peuvent venir s'insérer, et que des brides périphériques (15, 15') existent sur les plaques d'adaptateur pour l'adaptation sur la pièce de prise ou la pièce de boîtier de la connexion électrique qui possèdent des trous (16, 16'), qui sont en coïncidence avec des trous d'une pièce de connexion électrique placée respectivement sur l'autre face des plaques d'adaptateur et à travers lesquels on peut insérer des vis de fixation (19).

4. Dispositif selon la revendication 2 ou 3, caractérisé en ce que les pièces de connexion d'air sont vissées en plus à la plaque d'adaptateur correspondante.

5. Dispositif selon l'une des revendications 2 à 4, caractérisé en ce que la pièce de prise et la pièce de boîtier de la connexion électrique sont des pièces normalisées d'un dispositif de prise électrique.
